Europäisches Patentamt

(19) European Patent Office

Office européen des brevets

(11) Numéro de publication: **0 042 463**
**B1**

(12) FASCICULE DE BREVET EUROPEEN

(45) Date de publication du fascicule du brevet:
**11.01.84**

(51) Int. Cl.³: **B 65 G 47/48,** B 61 B 10/02

(21) Numéro de dépôt: **80400947.0**

(22) Date de dépôt: **24.06.80**

(54) **Système de convoyage automatique.**

(43) Date de publication de la demande:
**30.12.81 Bulletin 81/52**

(45) Mention de la délivrance du brevet:
**11.01.84 Bulletin 84/2**

(84) Etats contractants désignés:
**AT BE CH DE GB IT LI LU NL SE**

(56) Documents cités:
**DE - A - 1 011 355**
**DE - A - 1 256 157**
**DE - A - 1 273 418**
**FR - A - 1 167 059**
**FR - A - 1 314 934**
**FR - A - 2 077 730**
**FR - A - 2 239 368**
**GB - A - 779 127**

(73) Titulaire: **Villemaud, Jean Etienne, B.P. 312 7, rue de la Font Pinot, F-87008 Limoges Cedex (FR)**

(72) Inventeur: **Villemaud, Jean Etienne, B.P. 312 7, rue de la Font Pinot, F-87008 Limoges Cedex (FR)**

(74) Mandataire: **Ohayon, Joseph et al, Cabinet Brot 83, rue d'Amsterdam, F-75008 Paris (FR)**

## Système de convoyage automatique

La présente invention vise à optimiser le système de convoyage de charges du type décrit dans le brevet FR 2 068 731 et son Certificat d'Addition FR 2 092 673 et sur lequel circulent des chariots du type décrit dans le brevet FR 2 239 368.

On rappelle que ce système de convoyage est formé d'éléments modulaires rectilignes se raccordant perpendiculairement et comprenant chacun un chemin de roulement horizontal pour les chariots et un rail de guidage contenant une chaîne d'entraînement destinée à coopérer avec des moyens de poussée montés sur les chariots afin d'entraîner ceux-ci le long du chemin de roulement, le raccordement entre deux éléments modulaires parallèles se faisant par des éléments de jonction qui contiennent les parties courbes du chemin de roulement ainsi que les pignons et les tendeurs de la chaîne d'entraînement.

Le système de convoyage décrit dans le brevet FR 2 239 368 est du type énoncé dans le préambule de la revendication 1. Dans un tel système, le chariot comporte notamment une portion de suspension pourvue d'organes de roulement, un organe d'embrayage porté par la portion de suspension et susceptible d'engrener avec ladite chaîne d'entraînement, une portion de pilotage formée d'un tube vertical solidaire de la portion de suspension et sur lequel sont enfilées par une de leurs extrémités une pile de plaquettes de programmation, disposées de part et d'autre d'une butée tubulaire verticale, et une portion d'accrochage de la charge. Vue en plan, la portion d'aiguillage du chariot a sensiblement l'aspect d'une abeille. Pour cette raison, on désignera par la suite cette portion par le terme »abeille«.

L'abeille sert à piloter le chariot sur le système de convoyage. A cet effet, les plaquettes ont reçu une position prédéterminée d'un côté ou de l'autre de la butée tubulaire et au cours de la progression du chariot sur le système de convoyage, les extrémités libres des plaquettes sont susceptibles d'interférer avec l'une de plusieurs butées fixes, l'ensemble de l'abeille étant alors pivoté autour du tube vertical portant les plaquettes, de sorte que l'organe de guidage est intercepté par le rail d'aiguillage et que le chariot est dévié sur une voie latérale du réseau de convoyage.

Ainsi, dans le système de convoyage connu, les plaquettes constituent une véritable mémoire de données constantes, telles que le trajet à suivre sur le réseau de convoyage, les adresses de chargement et de déchargement. Avec une disposition donnée des plaquettes et des butées fixes correspondantes, le chariot accomplira automatiquement et à des moments bien déterminés une succession d'opérations choisies à l'avance.

Un changement de la mission du chariot au cours de son déplacement est exclu avec les systèmes de convoyage. Il faudrait auparavant stopper le chariot, puis modifier manuellement la disposition des plaquettes et des butées fixes, ce qui introduit un retard notable dans la manutention des charges et risque de conduire à de fausses manœuvres de la part de l'utilisateur.

On connaît d'autre part, par les brevets FR 1 167 059 et 1 374 934 des transporteurs sans fin qui assurent le transport de charges dans des cas très précis. Le premier en effet ne concerne que le déchargement de bennes à fond ouvrant, conçues exclusivement pour le tri postal et le second s'applique uniquement aux charges munies d'un crochet du type cintre utilisé dans l'industrie de l'habillement. D'autre part, les dispositifs selon ces deux brevets sont conçus pour être utilisés avec un type bien défini de convoyeur. Dans un cas comme dans l'autre, les dispositifs circulent toujours sur la même chaîne sans fin.

Dans d'autres systèmes de convoyage connus, le changement de niveau des charges est réalisé au moyen d'éléments de convoyage inclinés le long desquels les chariots portant les charges peuvent monter ou descendre. On conçoit qu'un tel système soit difficile à installer et relativement encombrant.

En outre, la charge est suspendue par un crochet et est désolidarisée manuellement, ce qui exclut l'automatisme dans le chargement et le déchargement et limite l'utilisation du système de convoyage à une charge unitaire.

La présente invention a pour but de remédier à ces inconvénients, et propose à cet effet un système de convoyage automatique du type comprenant des chariots porte-charges équipés chacun d'un élément support pour la charge à convoyer et de plaquettes de programmation empilées susceptibles de commander le déplacement des chariots sur un réseau de convoyeurs, ledit système de convoyage se caractérisant en ce qu'il comprend:

— un réseau de convoyeurs entièrement disposé sur un seul niveau horizontal;
— des moyens élévateurs montés à poste fixe le long des convoyeurs et susceptibles d'amener une charge jusqu'au niveau de la nacelle;
— des palpeurs montés au niveau des postes à desservir et susceptibles de détecter le besoin desdits postes en charges et de transmettre instantanément l'information, par l'intermédiaire d'organes de transmission mécaniques à des éléments stationnaires montés sur le trajet des chariots en amont desdits postes, de manière à les amener dans une position pour laquelle ils agissent sur les plaquettes de programmation lors de leur passage en regard desdits éléments stationnaires afin de modifier le trajet des chariots et/ou le moment où ils doivent arriver aux postes à desservir, et en ce que l'élément support de chaque chariot est constitué par une nacelle montée pivotante sous le chariot, autour d'un axe vertical et susceptible d'occuper au moins deux positions fixes décalées de 180° l'une par rapport à l'autre, de manière que dans l'une de ces positions, elle puisse ramasser au passage une charge posée sur un support et que dans l'autre position, elle puisse déposer au passage la charge qu'elle porte sur un support de déchargement.

Le système de convoyage selon l'invention est entièrement automatique, puisque, sans aucune intervention humaine, les nacelles des chariots sont capables de prendre d'elles mêmes les charges et de les déposer à des adresses choisies et que le guidage des chariots sur les convoyeurs est programmé à l'avance par les palettes.

De plus, grâce à la prévision des palpeurs, la manutention est optimisée, c'est-à-dire que tout ou partie du programme de déroulement des opérations peut être modifié automatiquement dans le temps, de façon que le programme s'adapte à de nouvelles conditions qui se sont établies dans le système de convoyage. Dans le cas d'un système de convoyage monté dans un grand magasin pour approvisionner automatiquement les différents rayons en marchandises, l'optimisation a pour effet par exemple que l'approvisionnement des rayons ne se fera pas toujours à des temps fixes, mais au moment où ils commencent à se dégarnir. Dans le cas d'un atelier de fabrication, grâce à l'optimisation de la manutention, les ouvriers se trouvant aux différents postes de travail n'ont jamais à se préoccuper ni de leur approvisionnement ni de l'évacuation des produits ouvrés et ceci, quelle que soit leur cadence de travail. En d'autres termes, l'optimisation est un automatisme dans le déroulement d'opérations variables dans le temps.

Ainsi, les données constantes (telles que les adresses des points de chargement et de déchargement, de montée ou de descente des charges), qui sont mémorisées au départ sur les chariots peuvent être modifiées à la réception des données variables dans le temps que constituent les besoins du poste. Le chariot exécute alors les opérations de chargement, déchargement, descente ou montée qui s'imposent pour satisfaire lesdits besoins du poste.

L'invention sera à présent décrite en détail en regard des dessins annexés dans lesquels:

— la figure 1 est une vue en plan schématique du système de convoyage selon l'invention, adapté au cas d'un atelier de montage mécanique;
— la figure 2 est une vue en perspective axonométrique d'un chariot selon l'invention, en position sur son rail de roulement;

— la figure 3 est une vue en élévation du chariot de la figure 2;
— la figure 4 est une vue en plan de la figure 3, les organes de roulement et les plaquettes étant omis pour la clarté du dessin;
— la figure 5 est une vue en perspective de la partie »abeille« du chariot;
— les figures 6 à 8 montrent en élévation trois phases successives d'une opération de chargement par un chariot muni d'une nacelle;
— les figures 9 à 11 sont des vues en plan correspondant aux figures 6 à 8, la nacelle étant seule représentée pour la clarté du dessin;
— les figures 12 à 14 montrent en élévation trois phases successives d'une opération de déchargement;
— les figures 15 à 17 sont des vues en plan correspondant aux figures 12 à 14;
— la figure 18 est une vue schématique en plan montrant une abeille dans trois positions successives au cours de son engagement avec une manette de commande;
— la figure 19 est une vue analogue à la figure 18, dans le cas d'une abeille qui ne coopère pas avec la manette de commande;
— la figure 20 est une vue schématique en plan montrant une abeille dans des positions successives au cours de la négociation d'un virage;
— la figure 21 est une vue schématique en plan d'un dispositif destiné à changer le programme d'une abeille;
— les figures 22 et 23 représentent dans deux positions différentes un dispositif de transmission d'un ordre d'arrêt;
— les figures 24 et 25 sont des vues en élévation d'un dispositif transmettant l'information de l'enlèvement d'une charge:
— les figures 26 et 27 sont des vues en plan des figures 24 et 25 respectivement.

Le système de convoyage et le chariot selon l'invention sont basés sur des principes déjà exposés dans les brevets FR 2 068 731 et 2 239 368 et le Certificat d'Addition FR 2 092 673 susmentionnés. Pour cette raison, on ne décrira en détail que leurs caractéristiques nouvelles.

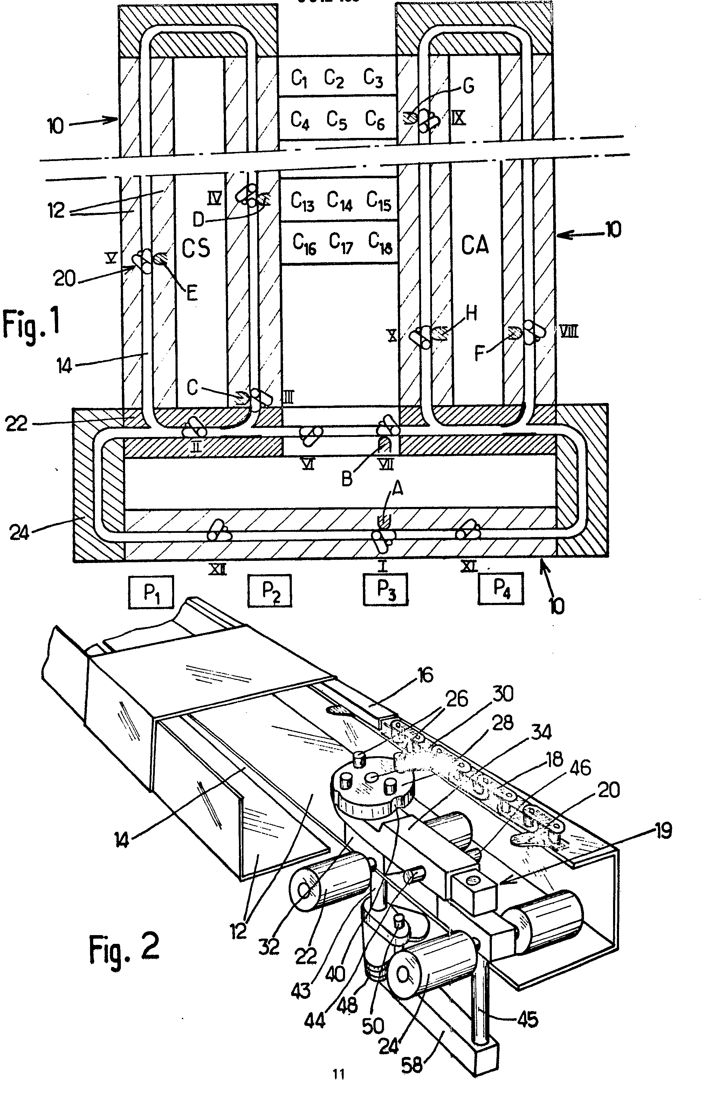

Le réseau de convoyage représenté à la figure 1 se compose d'éléments modulaires rectilignes 10 se raccordant à angle droit. Chaque élément modulaire comprend un chemin de roulement horizontal 12 (figure 2) formé de deux plages séparées par un faible intervalle 14 et un rail de guidage 16 dans lequel circule une chaîne d'entraînement 18 munie de poussoirs 20. Le raccordement entre deux éléments modulaires parallèles ou perpendiculaires se fait au moyen d'éléments modulaires de jonction 22, 24 comprenant la partie courbe du chemin de roulement, les pignons et les tendeurs, non représentés, de la chaîne 18.

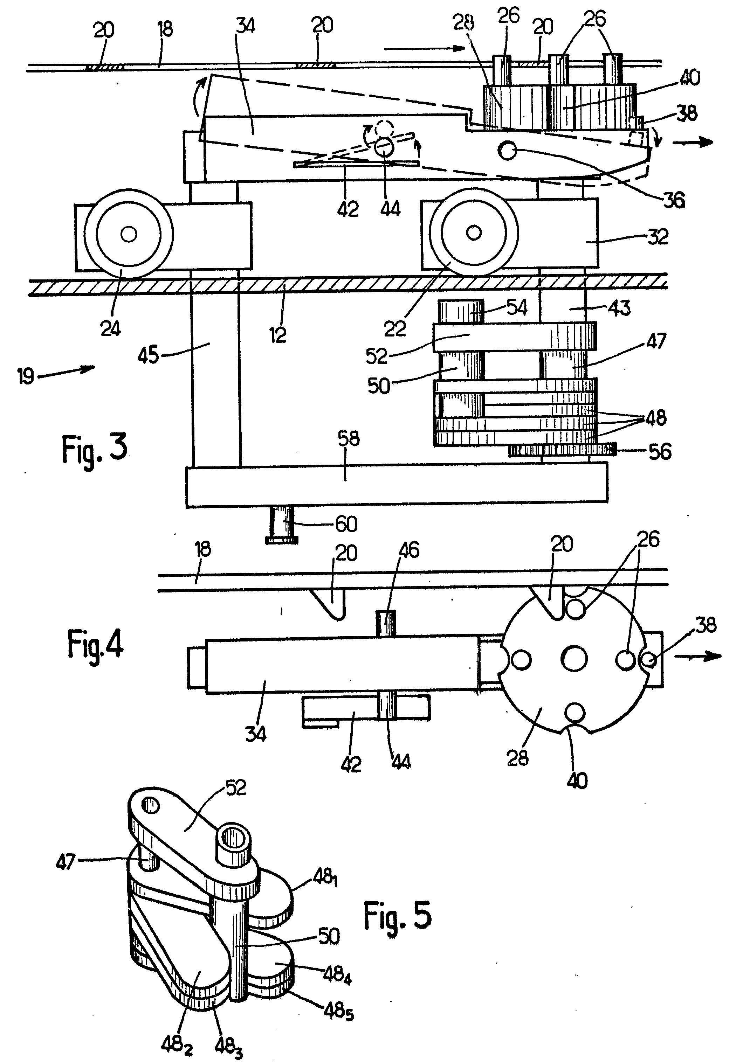

Sur ce réseau circulent des chariots portecharges 19, dont l'un est représenté en détail sur les figures 2 et 3. Chaque chariot comprend une paire de roues antérieures 22 et une paire de roues postérieures 24 disposées pour rouler sur les deux plages du chemin de roulement 12. Pour l'entraînement du chariot, les poussoirs 20 de la chaîne 18 coopèrent avec l'un des quatre tétons 26 qui surmontent un disque 28 monté pivotant autour d'un axe vertical 30 solidaire de la structure 32 qui porte les roues antérieures 22. Un sabot de débrayage 34 est monté pivotant autour d'un axe horizontal 36 solidaire de la structure antérieure du chariot, entre une position horizontale de repos (en traits forts sur la figure 3) et une position inclinée (en traits tiretés). Le sabot 34 est muni d'une butée 38 susceptible de s'encastrer dans l'une de plusieurs encoches 40 (figure 4) formées à la périphérie du disque 28, empêchant ainsi celui-ci de tourner autour de son axe. Le disque est alors solidaire du chariot qui est poussé sur le chemin de roulement.

Dans sa position inclinée, le sabot 34 pivote autour de son axe horizontal 36. La butée 38 n'est plus encastrée dans l'encoche 40 et le disque horizontal 28 tourne fou autour de son axe. Les tétons 26 sont tour à tour poussés par les poussoirs 20 de la chaîne. Le chariot n'étant plus entraîné, il s'arrête.

Le pivotement du sabot 34 autour de son axe peut être obtenu soit en abaissant sa partie antérieure, soit en soulevant sa partie arrière. On peut, par exemple, provoquer l'arrêt du chariot en disposant sur son passage une plaque pivotante 42 (figures 3 et 4) sur laquelle peut rouler l'un de deux galets latéraux 44 ou 46, ce qui aura pour effet de faire basculer le sabot vers l'avant. Lorsque la plaque 42 reprend sa position horizontale, l'arrière du sabot retombe par gravité et le chariot repart.

Sous le chariot sont fixés à l'avant et à l'arrière deux axes verticaux 43 et 45 passant à travers l'intervalle 14 défini entre les deux plages 12. Sur l'axe avant 43 est enfilé un tube 47 (figures 3 et 5) autour duquel sont empilées des plaquettes allongées 48 (cinq plaquettes $48_1$ à $48_5$, dans le cas des figures 3 et 5) l'arrière des plaquettes venant buter contre une tige 50 encastrée, tout comme le tube 47, dans une pièce oblongue 52; la partie supérieure de la tige 50 est munie d'un galet 54 dont le rôle sera expliqué par la suite.

On peut disposer à volonté les plaquettes 48 à droite et à gauche de la tige 50, chaque combinaison correspondant à un ensemble de données constantes et variables, donc à un programme bien défini pour le chariot. La portion de chariot comprenant le tube 47, les plaquettes 48 et le tube 50 sera appelée par la suite »abeille« en raison de sa forme particulière (voir figure 5).

A l'extrémité inférieure du tube 47, on peut fixer un pignon 56 (figure 3) utilisé pour les changements de programme, comme il sera expliqué par la suite. En dessous de l'abeille, les deux axes verticaux 43 et 45 sont reliés par une traverse 58 sous laquelle peut être fixé un axe 60 auquel peut être accroché un élément support, par exemple par un crochet ou une nacelle pour porter l'objet à convoyer.

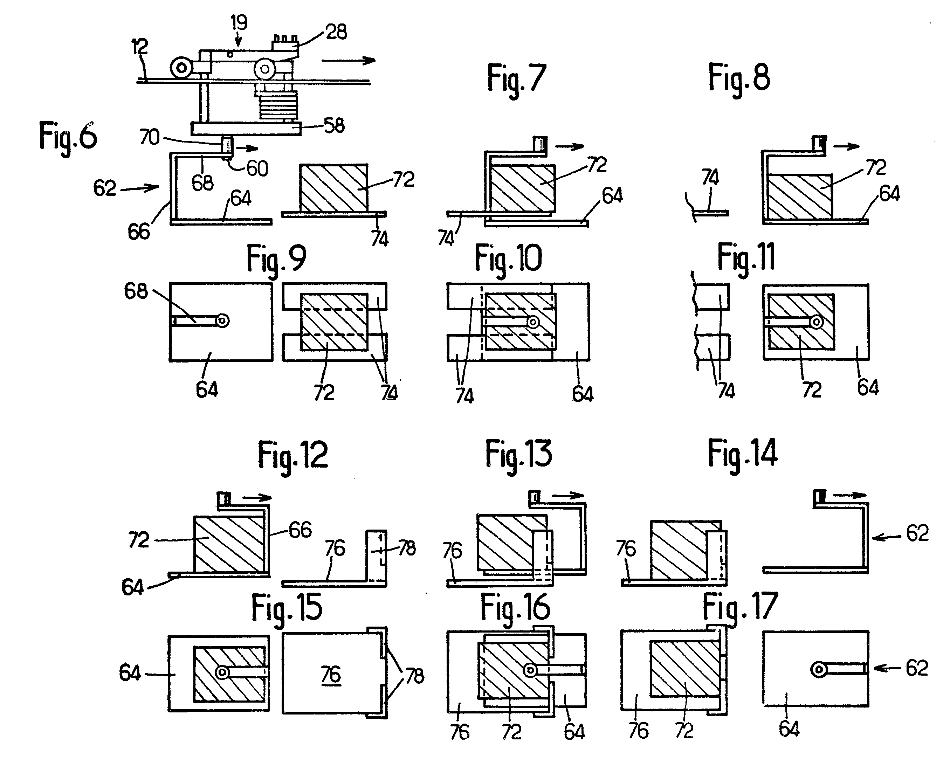

Les figures 6 à 11 représentent les opérations de chargement automatique par un chariot muni d'une nacelle 62. La nacelle est composée d'un plateau horizontal 64, d'un montant comportant une portion verticale 66 surmontée d'une portion horizontale 68 et enfin d'une petite portion de tube vertical 70 permettant à la nacelle de pivoter autour de l'axe 60 fixé sous la traverse 58 du chariot.

Un paquet 72 est posé sur une plate-forme 74 formée de deux plateaux séparés par un espacement légèrement supérieur à la largeur du montant vertical 66.

Pour la prise en charge du paquet, le plateau 64 passe sous la plate-forme 74, le montant 66 circulant entre les deux rives de la plate-forme. Lorsque ledit montant arrive au contact du paquet 72 (figure 7), il le pousse dans le sens de la marche. Le paquet glisse sur les deux rives de la plate-forme 74, puis bascule progressivement sur le plateau 64 de la nacelle 62 (figure 8).

Pour décharger le paquet 72 du plateau 64 sur une plate-forme 76, on fait d'abord pivoter la nacelle de 180° autour de l'axe 60 (figure 12) de façon à ce que le montant vertical 66 soit tourné vers l'avant, puis on fait passer le plateau 64 légèrement au-dessus de la plate-forme 76, laquelle est pourvue de deux butoirs 78. Lorsque le paquet 72 arrive au contact avec les butoirs 78 (figure 13), il est retenu, glisse sur le plateau 64, puis bascule progressivement sur la plate-forme 76 (figure 14).

Pour que ces opérations puissent s'effectuer correctement, il est nécessaire qu'au moment du transfert, les plate-formes 74 et 76 se trouvent sur la trajectoire de la nacelle. Pour cela, on utilisera par exemple des élévateurs capables d'amener automatiquement les plate-formes au moment voulu jusqu'au niveau de la nacelle. Il est commode d'entraîner les élévateurs par le groupe moteur du convoyeur.

Le système de convoyage selon l'invention comprend des moyens permettant d'optimiser les opérations de manutention des charges.

Avant de décrire ces moyens, on expliquera le sens de ce terme à propos de l'exemple représenté à la figure 1 qui montre un atelier de fabrication. L'atelier comprend quatre postes de travail $P_1$, $P_2$, $P_3$, $P_4$ et un magasin de stockage pourvu de casiers inclinés $C_1$, $C_2$, $C_3$, etc... disposés sur trois niveaux. La manutention entre l'atelier et le magasin est assurée par le convoyeur schématisé déjà décrit, sur lequel, pour la clarté du dessin, les chariots sont représentés par des abeilles.

Pour que les ouvriers affectés aux différents postes de travail n'aient pas à se préoccuper de leur approvisionnement ou de l'évacuation des produits ouvrés, les conditions suivantes doivent être réalisées:

— lorsqu'un travail est terminé à un poste, par exemple au poste P₃, un chariot doit automatiquement prendre en charge le produit à l'endroit et au niveau où il se trouve (position I), le véhiculer à travers le réseau de convoyeurs, en passant par exemple par les positions II et III, et le déposer à l'endroit et au niveau où il doit être stocké dans le magasin par exemple à la position IV, casier C₁₅,

— lorsque l'avance en produits à usiner d'un poste de travail (poste P₃) atteint la cote d'alerte, un chariot doit automatiquement se rendre dans le magasin de stockage en passant par les positions VII et VIII, pour prendre en charge le produit désiré à l'endroit et au niveau où il est stocké par exemple à la position IX, casier C₅, le véhiculer à travers le réseau de convoyeurs via les positions X et XI et le déposer en temps utile à l'endroit et au niveau où il doit être usiné (position I, poste P₃).

La réalisation de ces différentes opérations peut se décomposer en trois parties:

— mémorisation sur les chariots des données constantes telles que les adresses des points de chargement et de déchargement,

— mesure automatique et permanente des données variables dans le temps (moment précis où une pièce doit être évacuée, moment précis où un poste doit être approvisionné, fluidité de la circulation des chariots à un moment donné à un endroit donné ... etc) et transmission instantanée de ces données variables aux chariots qui les véhiculent de proche en proche jusqu'aux mécanismes d'exécution,

— réception et synthèse des différentes données par des mécanismes qui exécuteront les instructions (montée, descente, chargement, déchargement ... etc) au moment, au niveau et à l'endroit voulus.

On a déjà expliqué que l'orientation des différentes plaquettes de l'abeille correspond à un certain nombre de données constantes ou variables dans le temps.

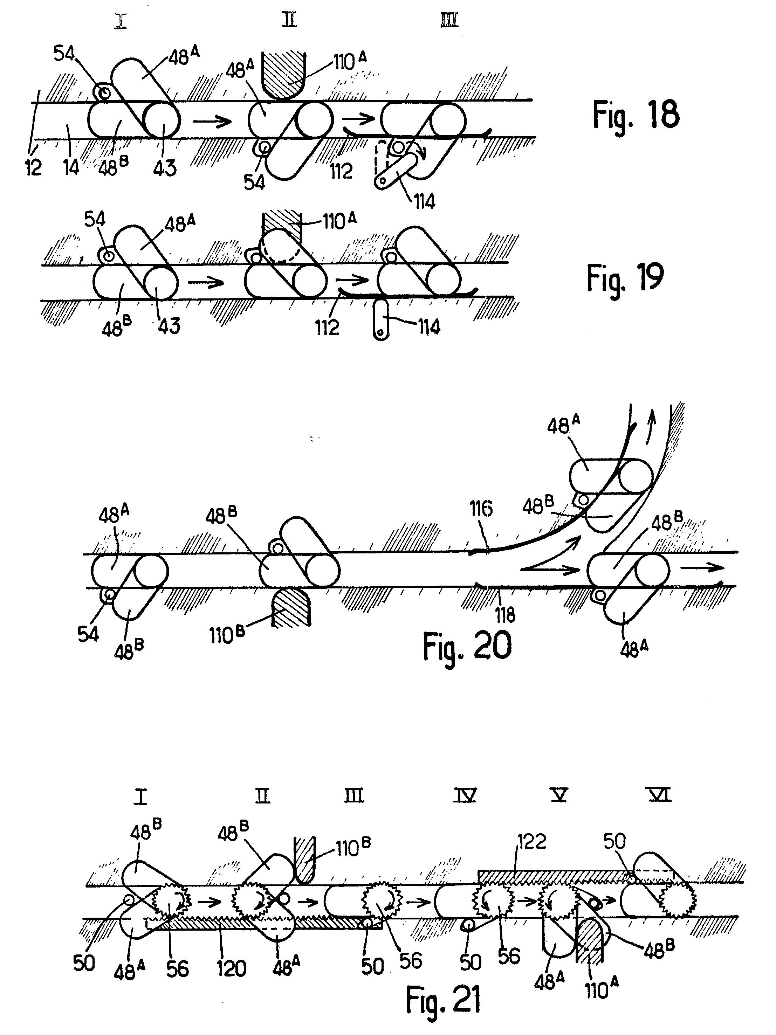

Les figures 18 à 20 illustrent le processus de retransmission d'une donnée par une abeille. Pour faciliter la compréhension de ces figures, les abeilles ont été représentées avec deux plaquettes seulement 48A et 48B, mais les résultats restent valables quel que soit le nombre des plaquettes qu'elles portent.

Comme le montre la figure 18, lorsque les abeilles rencontrent sur leur passage une butée 110A située dans un même plan horizontal que la plaquette 48A (position II), celle-ci est repoussée par la butée 110A. L'abeille pivote alors autour de son axe 43 et son galet 54 passe sur la rive droite du chemin de roulement 12, s'insère derrière un rail de guidage 112 (position III) et peut ainsi pousser sélectivement une manette 114 située sur cette même rive. L'abeille de la figure 19, par contre, n'est pas touchée par la butée 110A, étant donné que celle-ci n'est pas au même niveau que la palette 48A. Son galet 54 reste sur la rive gauche et n'a donc aucune action sur la manette 114.

Il en résulte qu'un mécanisme quelconque dont la mise en marche serait provoquée par la rotation de la manette 114, pourrait être commandé sélectivement par les seules abeilles programmées pour cela.

Inversement, n'importe quel mécanisme fixe peut, par l'intermédiaire de butées 110, transmettre sélectivement une information ou une instruction à un organe récepteur mobile; par exemple, comme le montre la figure 20, un organe émetteur quelconque, en mettant en place une butée 110B en amont d'une bifurcation, oriente vers la gauche les abeilles ayant leur plaquette 48B vers la droite. Le galet 54 desdites abeilles vient alors s'insérer derrière un rail 116, situé sur la rive gauche du chemin de roulement et qui les dirige de ce fait vers la bifurcation. Les autres abeilles continuent tout droit, leur galet 54 venant s'insérer derrière un rail 118 situé sur la rive opposée du chemin de roulement.

La figure 21 montre un dispositif assurant le changement de programme d'une abeille. Le pignon 56 déjà rencontré dans la figure 3 engrène avec une crémaillère 120 (position I) disposée le long d'une rive du chemin de roulement, faisant ainsi pivoter l'ensemble de l'abeille. Lorsque la rotation atteint 180° (position II), une butée 110B retient la plaquette 48B, cependant que la rotation de la plaquette 48A continue jusqu'à ce que les plaquettes se trouvent superposées (position III). Le programme précédent se trouve ainsi complètement effacé. Le pignon 56 engrène alors avec une deuxième crémaillère 122 (position IV) placée sur l'autre rive du chemin de roulement, de telle sorte que l'abeille pivote en sens inverse. Une butée sélective 110A se trouvant sur le passage de la plaquette 48A (position V) retient cette dernière pendant que la plaquette 48B continue de pivoter. La rotation s'arrête lorsque les plaquettes ont pris leur nouvelle place de part et d'autre de la tige 50 (position VI).

Dans les exemples des figures 20 et 21, il y a transmission sélective d'un organe émetteur fixe à un organe récepteur mobile. De même, on voit dans l'exemple de la figure 18 qu'un organe émetteur fixe peut, par l'intermédiaire d'une butée 110 et d'une abeille, transmettre sélectivement une information ou une instruction à un organe récepteur, fixe lui aussi, commandé par une manette 114: il y a ainsi transmission d'une donnée sélective d'un poste fixe à un autre poste fixe.

Si l'on remplace la manette 114 par une pile de plaquettes pivotantes, une abeille pourra, en poussant certaines de ces plaquettes, laisser un message qui sera reçu par une autre abeille: il y aura alors transmission d'une donnée sélective d'un mobile à un autre mobile.

En définitive, on voit que, par l'intermédiaire des abeilles, on peut transmettre des données sélectives, que l'organe émetteur soit fixe et l'organe récepteur mobile ou bien l'inverse ou encore que les deux soient fixes ou enfin que les deux soient mobiles.

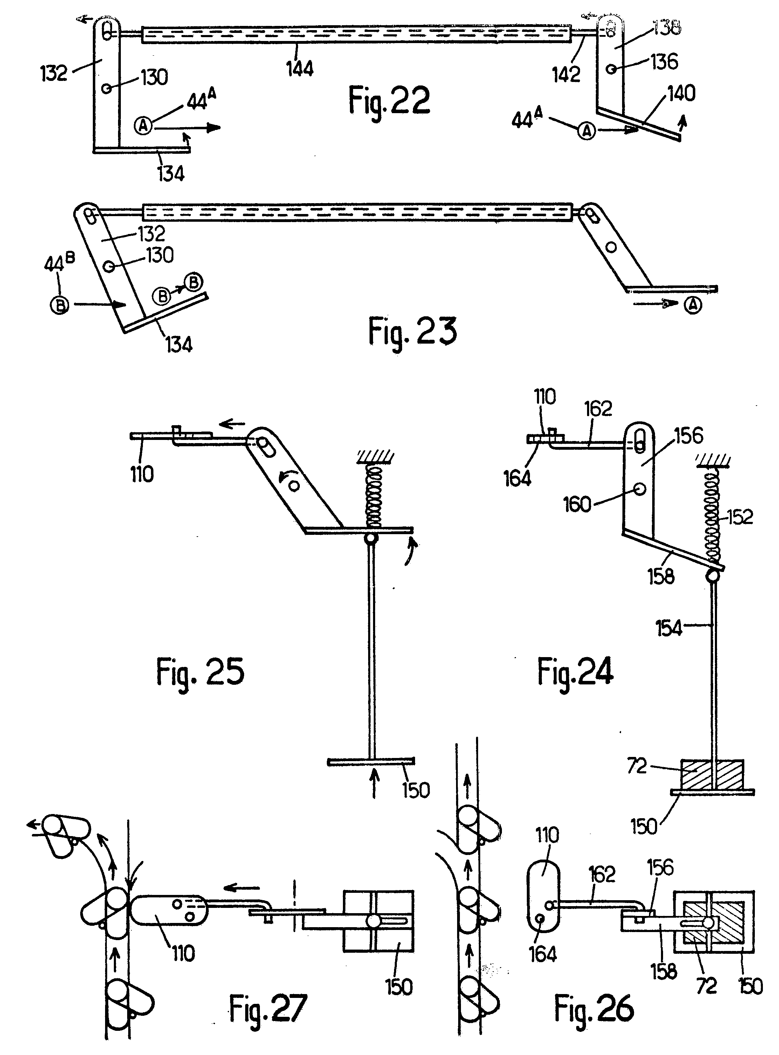

Avec référence aux figures 22 à 27, on étudiera la transmission aux abeilles des données variables dans le temps. On distinguera les données sélectives qui s'adressent à des chariots ayant un programme déterminé et les données non sélectives qui s'adressent à tous les chariots qui passent à un endroit déterminé à un moment donné.

La figure 22 représente un exemple de transmission d'une donnée variable dans le temps mais non sélective. Un premier chariot A, schématisé par son seul galet 44A pour alléger le dessin, donne à un chariot B représenté par son galet 44B, l'information de son passage en un point donné du circuit à un instant donné, ainsi que l'instruction de s'arrêter instantanément en un autre point donné du circuit. On notera que les données n'étant pas sélectives (elles s'adressent à n'importe quel chariot se trouvant à un instant donné à un endroit donné), on ne fait pas intervenir les abeilles dont le rôle est toujours sélectif. Le mécanisme de transmission de l'instruction est fixé au bâti du convoyeur le long et légèrement au-dessus du chemin de roulement. Il comprend un premier ensemble rigide constitué d'une plaque verticale 132 montée pivotante autour d'un axe horizontal 130 et d'une plaque horizontale 134, un deuxième ensemble rigide constitué d'une plaque verticale 138 montée pivotante autour d'un axe horizontal 136 parallèle à l'axe 130 et d'une plaque 140 qui fait un angle obtus avec la plaque 138. Une tringle est reliée à articulation dans des boutonnières formées aux extrémités supérieures des plaques verticales 132 et 138. La tringle est montée coulissante dans un tube fixe 144.

Lorsque le chariot A passe devant le premier ensemble, son galet 44A n'est pas touché par la plaque 134 étant donné que celle-ci est horizontale. Par contre, lorsqu'il arrive à la hauteur du second ensemble, le galet 44A soulève la plaque 140, ce qui a pour effet de faire pivoter l'ensemble 138, 140 autour de l'axe 136. La tringle 142 coulisse alors vers la gauche, provoquant le pivotement de l'ensemble 132, 134 autour de l'axe 130. La plaque 134 prend alors une position inclinée vers le haut (figure 23). Si un chariot B arrive alors à la hauteur de l'ensemble 132, 134, son galet 44B roule sur le plateau 134 jusqu'à ce que le chariot B débraye et s'arrête. Dans ce cas, la donnée variable constituée par l'annonce du passage du chariot A est recueillie par le palpeur 138, 140 qui la transmet au chariot B par l'intermédiaire de la butée pivotante 132, 134.

Il suffit de placer ce mécanisme en différents points du circuit pour régler automatiquement tous les problèmes de circulation des chariots: en particulier, chaque carrefour convergent comporte un certain nombre de ces mécanismes afin de bloquer la circulation des chariots sur l'une des voies pendant que les autres chariots circulent librement sur l'autre voie.

Les données variables sélectives s'adressent à l'abeille. Elles sont recueillies par des instruments tels que palpeur, balance ou compteur qui les transmettent sélectivement à l'abeille par l'intermédiaire de butées par la méthode précédemment décrite.

Les figures 24 à 27 montrent comment l'information que l'avance en pièces à un poste de travail a atteint la cote d'alerte, peut être transmise automatiquement et sélectivement à l'abeille du chariot attribué à ce poste.

Lorsqu'un ouvrier prend un paquet 72 (figure 24) sur une plate-forme 150 placée à portée de sa main et reliée à un ressort 152 par une tige verticale 154, ledit ressort qui était étiré en raison du poids du paquet, se rétracte instantanément, faisant pivoter un ensemble 156, 158, analogue à celui de la figure 22, autour de son axe horizontal 160. Une tringle 162, qui coulisse dans un tube horizontal, non figuré sur le dessin, fait alors pivoter une butée 110 autour d'un axe excentré 164, la mettant ainsi en position active. Lorsque le chariot attribué au poste de travail passe devant cette butée, l'abeille pivote et le chariot se dirige vers le magasin de stockage pour aller chercher un nouveau paquet de pièces qu'il dépose sur la plate-forme 150. Le ressort 152 est à nouveau étiré par le poids du paquet, l'ensemble 156, 158 pivote autour de son axe et la tringle 162 remet la butée 110 en position neutre. Dans ce cas, la donnée variable dans le temps constituée par l'annonce de l'enlèvement du paquet est recueillie par la plate-forme 150 du peson à ressort qui la transmet au chariot attribué au poste $P_3$ par l'intermédiaire de la butée pivotante 110.

Pour l'évacuation des produits finis, le processus est le même, à cette différence près que la mise en place de la butée est provoquée par l'abaissement de la plate-forme sous le poids du paquet de produits finis.

Tous les éléments permettant de comprendre l'optimisation de la manutention sont réunis, et l'on peut à présent expliquer le mode de fonctionnement de la figure 1.

La mémorisation sur le chariot de toutes les données constantes nécessaires à sa fonction se fera en orientant les plaquettes de l'abeille du côté des butées correspondant par exemple aux adresses du poste $P_3$ et des casiers $C_{15}$ et $C_5$. Pour aller déposer un produit usiné au casier $C_{15}$, l'abeille devra être orientée par une butée A (position 1) vers le circuit de stockage CS, puis une butée C (position III) sélectionnera le niveau du casier, une butée D (position IV) le point de déchargement, une butée E (position V) le niveau du retour. Pour l'approvisionnement, une butée B (position VII) orientera l'abeille vers le circuit d'approvisionnement CA, une butée F (position VIII) sélectionnera le niveau du casier $C_5$, une butée G (position IX) le point de chargement, une butée H (position X) le niveau de retour.

L'abeille devra donc avoir sur sa droite les butées A, B, D, G et les plaquettes correspondantes, et sur sa gauche, les butées C, E, F, H et les plaquettes correspondantes.

La mesure automatique et permanente des données variables dans le temps se fera, pour les données non sélectives (telles que la circulation des chariots) par le dispositif des figures 22 et 23 et pour les données sélectives, par le dispositif des figures 24 à 27. Ces données seront d'une part, l'ordre d'évacuation des pièces usinées qui provoquera la mise en place de la butée pivotante A, ladite butée orientant l'abeille vers le circuit de stockage CS selon le principe de la figure 20, d'autre part, l'ordre de réapprovisionnement qui provoquera la mise en place de la butée pivotante B, ladite butée orientant l'abeille vers le circuit d'approvisionnement CA selon le principe de la figure 20.

Pour la réception et la synthèse des différentes données, les mécanismes d'exécution seront les suivants:

- au point I, seront disposés une plate-forme 74 avec un élévateur conformes aux figures 6 à 17 avec déclenchement par manette conformément au principe des figures 18 et 19;
- aux points III, V, VIII et X seront prévus des crémaillères destinées à engrener avec un élévateur de charge et un déclencheur par manette comme dans le cas de la figure 6;
- aux points IV et IX sont prévues des plate-formes 74 avec déclenchement par manette comme dans le cas des figures 18 et 19.

Pour résoudre le problème de manutention de la figure 1, on a fait a priori un certain nombre de choix: chariot-abeille attribué à chaque poste, élévateur mobile fixé sous le chariot, nacelle à plateau horizontal fixe ... etc.

Pour ce problème comme pour la plupart des autres problèmes qui peuvent se poser en matière de manutention optimisée, on peut prendre d'autres options sans pour autant sortir du cadre de l'invention.

On peut par exemple utiliser des chariots dont l'abeille ne mémorise aucune donnée constante: tout besoin en un point et à un instant donné est automatiquement transmis conformément au principe selon les figures 24 à 27 à une gamme de butées qui, par le procédé selon la figure 21, inscrit sur l'abeille du premier chariot qui se présente, toutes les adresses ou références nécessaires à l'accomplissement de sa mission.

On peut également utiliser comme élévateurs, pour le chargement et le déchargement, des montecharges à poste fixe commandés par une manette poussée sélectivement par l'abeille.

On peut enfin utiliser différents types de nacelles selon la nature des charges; ainsi, dans le cas de charges palettisées, le plateau de la nacelle peut être remplacé par une fourche horizontale susceptible de venir s'encastrer dans la palette, tandis que pour des matières pulvérulentes ou même liquides, on remplacera le plateau par un godet dont le basculement sera commandé par l'abeille, etc. . .

En conclusion, le système de convoyage de l'invention apporte une solution particulière à la plupart des problèmes de manutention optimisée.

## Revendications

1. Système de convoyage automatique comprenant des chariots porte-charges équipés chacun d'un élément support (62) pour la charge à convoyer et de plaquettes de programmation (48) empilées susceptibles de commander le déplacement des chariots sur un réseau de convoyeurs, caractérisé en ce qu'il comprend:

- un réseau de convoyeurs (10, 20) entièrement disposé sur un seul niveau horizontal;
- des moyens élévateurs montés à poste fixe le long des convoyeurs et susceptibles d'amener une charge jusqu'au niveau de l'élément support (62) des chariots;
- des palpeurs (140; 150, 152) montés au niveau des postes à desservir et susceptibles de détecter le besoin desdits postes en charges et de transmettre instantanément l'information, par l'intermédiaire d'organes de transmission mécaniques (142; 158 à 162) à des éléments stationnaires (134; 110) montés sur le trajet des chariots (19) en amont desdits postes, de manière à les amener dans une position pour laquelle ils agissent sur les plaquettes de programmation (48) lors de leur passage en regard desdits éléments stationnaires afin de modifier le trajet des chariots et/ou le moment où ils doivent arriver aux postes à desservir, et en ce que l'élément support de chaque chariot est constitué par une nacelle (62), montée pivotante sous le chariot, autour d'un axe vertical (60) et susceptible d'occuper au moins deux positions fixes décalées de 180° l'une par rapport à l'autre, de manière que dans l'une de ces positions, elle puisse ramasser au passage une charge (72) posée sur un support (74) et que dans l'autre position, elle puisse déposer au passage la charge qu'elle porte sur un support de déchargement (76).

2. Système de convoyage selon la revendication 1, caractérisé en ce que la charge (72) à faire passer sur la nacelle (62) est posée sur une plate-forme de chargement composée de deux plaques (74) séparées par un espacement légèrement supérieur à la largeur d'un montant vertical (66), de sorte que, pendant le déplacement du chariot (19), ledit montant, passant entre lesdites plaques, pousse la charge sur la plate-forme jusqu'à la transférer sur le plateau (64) de la nacelle (figures 6 à 11).

3. Système de convoyage selon la revendication 2, caractérisé en ce que pour le déchargement de la nacelle (62), on utilise une plate-forme de déchargement (76) pourvue de butoirs verticaux (78) destinés à retenir la charge (72) pendant le déplacement du chariot jusqu'à la transférer du plateau (64) de la nacelle à la plate-forme de déchargement (figures 12 à 17).

4. Système de convoyage selon la revendication 1, caractérisé en ce que les plaquettes de programmation sont susceptibles de faire pivoter une manette de commande (114) vers une position active pour laquelle la manette actionne un mécanisme effectuant une opération constante, telle que chargement, déchargement, montée ou descente (figures 5 et 18).

5. Système de convoyage selon la revendication 4, caractérisé en ce que le chariot est pourvu d'un élément de poussée (54) susceptible d'écarter ladite manette (114) de sa position inactive vers sa position active (figure 18).

6. Système de convoyage selon la revendication 1, caractérisé en ce que le palpeur comprend d'une part, une première et une seconde pièces (132, 138) montées pivotantes respectivement autour de deux axes horizontaux et parallèles (130, 136), la première en aval de la seconde par rapport au sens d'avance des chariots sur le convoyeur, et d'autre part, un élément de transmission mécanique (142) articulé auxdites pièces, la disposition étant telle que, lorsque la première pièce (132) interfère avec le trajet d'un organe d'embrayage (44A) porté par le chariot, la seconde pièce (138) n'interfère pas avec ledit trajet, et qu'un pivotement de la première pièce, provoqué par le passage d'un chariot, est transmis en amont par ledit élément de transmission (142) à la seconde pièce, laquelle interfère alors avec l'organe d'embrayage des chariots suivants (figures 22, 23).

7. Système de convoyage selon l'une des revendications 1 et 6, caractérisé en ce que ledit mécanisme de transmission est disposé aux carrefours du convoyeur afin de bloquer la circulation sur l'une des voies pendant que les autres chariots circulent librement sur l'autre voie, lesdites pièces étant susceptibles de faire pivoter l'organe d'embrayage du chariot pour débrayer celui-ci des moyens d'entraînement et provoquer ainsi son arrêt.

8. Système de convoyage selon l'une des revendications 1 et 6, caractérisé en ce que pour transmettre automatiquement l'information que l'avance à un poste de travail a atteint la cote d'alerte, on utilise audit poste un palpeur à peson comprenant une butée rétractable (110) montée pivotante entre une position active pour laquelle elle interfère avec une plaquette de programmation et une position inactive pour laquelle elle s'efface, un plateau horizontal porte-charge (150) suspendu élastiquement à un point fixe dudit poste de travail, de sorte que son niveau varie selon qu'il porte ou non une charge, et un élément de transmission (156) reliant ledit plateau (150) à ladite butée (110), de façon qu'aux positions haute et basse du plateau correspondent respectivement la position active et la position inactive de la butée ou inversement (figures 24 à 27).

9. Système de convoyage selon la revendication 1, caractérisé en ce que pour effectuer le changement de programme des chariots, il est prévu une première crémaillère (120) avec laquelle engrène un pignon (56) porté par un tube (47) sur lequel sont enfilées les plaquettes de programmation (48A, 48B), au moins une butée fixe (110B) destinée à superposer les plaquettes, une seconde crémaillère (122) disposée de l'autre côté dudit tube par rapport à la première crémaillère, et au moins une seconde butée (110A) fixe destinée à mettre en place dans la nouvelle position choisie les plaquettes de part et d'autre d'un second tube (50) parallèle au premier tube et solidaire de celui-ci en rotation (figure 21).

## Patentansprüche

1. Selbsttätige Förderanlage mit Laufkatzen, von welchen jede mit einem Tragglied (62) für die zu fördernde Last und mit übereinander gestapelten Programmierplatten (48) zum Steuern der Bewegung der Laufkatzen auf einem Netz von Förderern ausgestattet ist, dadurch gekennzeichnet, daß die Förderanlage

— ein zur Gänze in einem einzigen horizontalen Niveau angeordnetes Netz von Förderern (10, 20),

— entlang der Förderer an Arbeitsstellen angeordnete Hebezeuge zum Heranbringen einer Last auf das Niveau des Traggliedes (62) der Laufkatzen und

— in Höhe der zu versorgenden Arbeitsstellen angeordnete Fühler (140; 150, 152) aufweist, welche den Bedarf der Arbeitsstellen an Lasten feststellen und die Information über mechanische Übertragungsglieder (142; 158 bis 162) auf vor den Arbeitsstellen am Transportweg der Laufkatzen (19) angeordnete ortsfeste Elemente (134; 110) augenblicklich in solcher Weise übertragen, daß sie zwecks Veränderung des Transportweges der Laufkatzen und/oder des Sollzeitpunktes ihrer Ankunft an den zu versorgenden Arbeitsstellen in eine Stellung bewegt werden, in welcher sie während ihres Vorbeibewegens an den ortsfesten Elementen auf die Programmierplatten (48) wirken, und daß das Tragglied einer jeden Laufkatze von einer an der Unterseite der Laufkatze um eine vertikale Achse (60) verschwenkbar angeordneten Hängeplatte (62) gebildet ist, welche solcherart in zumindest zwei gegeneinander um 180° versetzte Stellungen überführbar ist, daß sie in einer dieser Stellungen im Vorbeibewegen eine auf einem Zufuhrgestell (74) ruhende Last (72) aufnehmen und in der anderen Stellung eine von ihr getragene Last auf einem Entladegestell (76) ablegen kann.

2. Förderanlage nach Anspruch 1, dadurch gekennzeichnet, daß die auf die Hängeplatte (62) überzuführende Last (72) auf einer Ladepalette ruht, die aus zwei Platten (74) besteht, die voneinander durch einen Spalt getrennt sind, welcher etwas größer als die Breite eines vertikalen Stehers (66) ist, so daß dieser Steher während der Bewegung der Laufkatze (19) während seiner Bewegung zwischen den erwähnten Platten die auf der Ladepalette befindliche Last weiterschiebt und sie auf die Ladefläche (64) der Hängeplatte überführt (Fig. 6 bis 11).

3. Förderanlage nach Anspruch 2, dadurch gekennzeichnet, daß für das Entladen der Hängeplatte (62) eine Entladepalette (76) verwendet wird, die mit zwei vertikalen Anschlägen (78) ausgestattet ist, die dazu bestimmt sind, die Last (72) während des Bewegens der Laufkatze zurückzuhalten, bis die Last von der Ladefläche (64) der Hängeplatte auf die Entladepalette übergeführt ist (Fig. 12 bis 17).

4. Förderanlage nach Anspruch 1, dadurch gekennzeichnet, daß die Programmierplatten in der Lage sind, einen Steuerhebel (114) in eine Wirkstellung umzulegen, in welcher dieser Steuerhebel eine eine gleichbleibende Arbeit wie Beladen, Entladen, Anheben oder Absenken ausführende Einrichtung betätigt (Fig. 5 und 18).

5. Förderanlage nach Anspruch 4, dadurch gekennzeichnet, daß die Laufkatze mit einem Mitnehmer (54) ausgestattet ist, welcher den Steuerhebel (114) aus einer unwirksamen Stellung in seine Wirkstellung umlegt (Fig. 18).

6. Förderanlage nach Anspruch 1, dadurch gekennzeichnet, daß der Fühler einerseits einen ersten und einen zweiten Teil (132, 138), welche um zwei horizontale und parallele Achsen (130, 136) verschwenkbar sind und von welchen der erste Teil auf die Laufrichtung der Laufkatzen am Förderer bezogen hinter dem zweiten Teil liegt, und ein an diesen beiden Teilen angelenktes mechanisches Übertragungsglied (142) aufweist, wobei die Anordnung so getroffen ist, daß beim Eintreten des ersten Teils (132) in die Bewegungsbahn eines von der Laufkatze getragenen Einrückorgans (44A) der zweite Teil (138) nicht in dieser Bewegungsbahn liegt und daß ein durch Vorbeibewegen einer Laufkatze bewirktes Verschwenken des ersten Teils von dem Übertragungsglied (142) in Förderrichtung auf den zweiten Teil übertragen wird, welcher sodann mit dem Einrückorgan der folgenden Laufkatzen zusammenwirkt (Fig. 22, 23).

7. Förderanlage nach einem der Ansprüche 1 und 6, dadurch gekennzeichnet, daß die erwähnte Übertragungseinrichtung an den Kreuzungen des Förderers angeordnet ist, um das Fördern auf einem der Wege zu blockieren, während die anderen Laufkatzen frei am anderen Weg laufen, wobei die erwähnten Teile in der Lage sind, das Einrückorgan der Laufkatze zu verschwenken, um diese aus den Antriebsmitteln auszurücken und damit zum Stillstand zu bringen.

8. Förderanlage nach einem der Ansprüche 1 und 6, dadurch gekennzeichnet, daß zwecks selbsttätigen Übertragens der Information, daß die Zufuhrbewegung zu einer Arbeitsstelle die Bereitschaftsstellung erreicht hat, an dieser Arbeitsstelle ein Gewichtsfühler, welcher einen zurückziehbaren Anschlag (110) aufweist, der zwischen einer Wirkstellung, in welcher er mit einer Programmierplatte zusammenwirkt, und einer unwirksamen Stellung, in welcher er ausweicht, schwenkbar montiert ist, eine horizontale Lasttragplatte (150), welche an einer ortsfesten Stelle der Arbeitsstelle elastisch so aufgehängt ist, daß ihre Höhenlage veränderlich ist, je nachdem, ob sie eine Last trägt oder nicht und ein Übertragungsglied (156) verwendet wird, welches die Lasttragplatte (150) mit dem erwähnten Anschlag (110) solcherart verbindet, daß der oberen Lage und der unteren Lage der Lasttragplatte die Wirkstellung bzw. die unwirksame Stellung des Anschlags oder umgekehrt entspricht (Fig. 24 bis 27).

9. Förderanlage nach Anspruch 1, dadurch gekennzeichnet, daß zwecks Änderung des Programms der Laufkatzen eine erste Zahnstange (120) vorgesehen ist, mit welcher ein von einem Rohr (47) getragenes Ritzel (56) kämmt, wobei auf dem Rohr (47) die Programmierplatten (48A, 48B) aufgeschoben sind, zumindest ein ortsfester Anschlag (110B) vorgesehen ist, welcher dazu dient, die Programmierplatten übereinanderzulegen, auf der anderen Seite dieses Rohres, bezogen auf die erste Zahnstange, eine zweite Zahnstange (122) vorgesehen ist und zumindest ein zweiter ortsfester Anschlag (110A) vorgesehen ist, welcher dazu bestimmt ist, die Programmierplatten zu beiden Seiten eines zweiten Rohres (50), welches parallel zum ersten Rohr verläuft und mit diesem drehfest verbunden ist, in die neu gewählte Stellung zu bringen (Fig. 21).

**Claims**

1. An automatic conveyor system comprising load-carrying carriages each equipped with a support element for the load to be conveyed and stacked programming plates for controlling the movement of the carriages over a conveyor network, characterized in that it comprises:

- a conveyor network (10, 20) entirely disposed on a single horizontal level;
- elevator means mounted in a fixed station along the conveyors and adapted to bring a load to the level of its support element (62) of the carriages;
- sensors (140; 150, 152) mounted at the level of the stations to be served and adapted to detect the load need of said stations and to transmit the information instantaneously through mechanical transmission members (142; 158 to 162) to stationary elements (134; 110) mounted in the path of the carriages (19) upstream of said stations, so as to bring them into a position in which they act on the programming plates (48) when they pass said stationary elements so as to modify the path of the carriages and/or the time when they should arrive at the stations to be served, and in that the support element of each carriage is formed ba a nacelle (62) pivotably mounted under the carriage about a vertical axis (60) and adapted to occupy at least two fixed positions offset by 180° with respect to each other, so that in one of these positions, it may pick up when passing a load (72) placed on a support (74) and in the other position it may, when passing, place the load it carries on an unloading support (76).

2. The conveyor system according to claim 1, characterized in that the load (72) to be passed on to the nacelle (62) is placed on a loading platform formed of two plates (74) separated by a space slightly greater than the width of a vertical upright (66) so that, during the movement of the carriage (19) said upright, passing between said plates, pushes the load on to the platform to transfer it on to the plate (64) of the nacelle (figures 6 to 11).

3. The conveyor system according to claim 2, characterized in that, for unloading the nacelle (62), an unloading platform (76) is used provided with vertical stops (78) for retaining the load (72) during movement of the carriage until it is transferred from the plate (64) of the nacelle to the unloading platform (figures 12 to 17).

4. The conveyor system according to claim 1, characterized in that the programming plates are adapted to cause a control handle (114) to pivot to an active position in which the handle actuates a mechanism carrying out a constant operation, such as loading, unloading, ascending or descending (figures 8 and 18).

5. The conveyor system according to claim 4, characterized in that the carriage is provided with a thrust element (54) adapted to move said handle (114) from its inactive position to its active position (figure 18).

6. The conveyor system according to claim 1, characterized in that the sensor comprises, on the one hand, a first part and a second part (132, 138) pivotably mounted respectively about two horizontal and parallel axes (130, 136), the first one downstream of the second with respect to the advancing direction of the carriages on the conveyor and, on the other hand, a mechanical transmission element (142) hinged to said parts, the arrangement being such that, when the first part (132) interferes with the path of a clutch member (44A) carried by the carriage, the second part (138) does not interfere with said path and such that pivoting of the first part caused by the passage of a carriage, is transmitted upstream by said transmission element (142) to said second part, which then interferes with the clutch member of the following carriages (figures 22, 23).

7. The conveyor system according to one of claims 1 and 6, characterized in that said transmission mechanism is disposed at the crossroads of the conveyor so as to stop the circulation on one of the tracks while the other carriages travel freely on the other track, said parts being adapted to cause the clutch member of the carriage to pivot so as to disengage this latter from the drive means and cause it to stop.

8. The conveyor system according to one of claims 1 and 6, characterized in that, so as to transmit automatically the information that the advance to a work station has reached the danger point, a balance sensor is used at said station comprising a retractable stop (110) mounted for pivoting between an active position in which it interferes with a programming plate and an inactive position in which it retracts, a horizontal load carrying plate (150) resiliently suspended from a fixed point of said work station so that its level varies according as to whether it is carrying a load or not, and a transmission element (156) connecting said plate (150) to said stop (110), so that, to said high and low positions of the plate, there correspond respectively the active position and the inactive position of the stop or conversely (figures 24 to 27).

9. The conveyor system according to claim 1, characterized in that, to change the programme of the carriages, a first rack (120) is provided with which a pinion (56) meshes carried by a tube (47) on to which the programming plates (48A, 48B) are fitted, at least one fixed stop (110B) for superimposing the plates, a second rack (122) disposed on the other side of said tube with respect to the first rack, and at least one second fixed stop (110A) for positioning the plates in the chosen new position on each side of a second tube (50) parallel to the first tube and interlocked therwith for rotation (figure 21).

**0 042 463**

Fig.1

Fig. 2

0 042 463

Fig. 3

Fig. 4

Fig. 5

13

Fig.6

Fig.7

Fig.8

Fig.9

Fig.10

Fig.11

Fig.12

Fig.13

Fig.14

Fig.15

Fig.16

Fig.17

0 042 463

I   II   III

Fig. 18

Fig. 19

Fig. 20

I   II   III   IV   V   VI

Fig. 21

Fig. 22

Fig. 23

Fig. 25

Fig. 24

Fig. 27

Fig. 26